# EUROPÄISCHE PATENTANMELDUNG

(11) **EP 2 955 407 A1**
(43) Veröffentlichungstag der Anmeldung: **16.12.2015**
(21) Anmeldenummer: 15167432.2
(22) Anmeldetag: 12.05.2015
(51) Int. Cl.: F16D 13/58

(54) **SCHAFTBUCHSE FÜR EINEN FEDERBOLZEN EINER REIBKUPPLUNG**

(30) Priorität: 11.06.2014 DE 102014211060
(71) Anmelder: Schaeffler Technologies AG & Co. KG, 91074 Herzogenaurach (DE)
(72) Erfinder: Voorspoels, Ludovic, 67410 Drusenheim (FR); Fohrer, Thierry, 67850 Offendorf (FR); Merckling, Tony, 67340 Schillersdorf (FR)

(57) **Zusammenfassung**

Die Erfindung betrifft eine Schaftbuchse für einen Federbolzen einer Reibkupplung, welcher zumindest die folgenden Komponenten aufweist:
- ein Kopfende;
- einen am gegenüberliegenden Ende gebildeten Setzabschnitt;
- einen Schaftabschnitt mit einer Schaftachse, mit einer Abschnittshöhe zwischen dem Setzabschnitt und dem Kopfende, mit einem Innendurchmesser und mit einem Außendurchmesser zum Umgeben eines Schafts,

wobei der Setzabschnitt zwei gleichgeformte Vorsprünge aufweist, die sich auf einer kongruenten Linie, bevorzugt diametral zueinander radial, nach außen erstrecken, wobei die Vorsprünge eine axiale Erstreckung aufweisen, die maximal dem Innendurchmesser des Schaftabschnitts entspricht.

Mit dem hier vorgeschlagenen Federbolzen beziehungsweise der vorgeschlagenen Schaftbuchse ist es möglich, mit einfachen Fertigungsmitteln eine verbesserte Festigkeit des Federbolzens bei geringerem Materialeinsatz zu erreichen.

## Beschreibung

Die Erfindung betrifft eine Schaftbuchse für einen Federbolzen einer Reibkupplung sowie einen Federbolzen für eine Reibkupplung und eine Reibkupplung, insbesondere für ein Kraftfahrzeug.

Aus dem Stand der Technik sind Federbolzen bekannt, die den Nachteil aufweisen, dass eine Hebelfeder, zum Beispiel eine Stützfeder oder Sensierfeder für eine Betätigungsfeder einer Reibkupplung mit einer Kante auf einem Federbolzenflansch aufliegt, dem sogenannten Setzkopf, und aufgrund der Krafteinleitung sich in den Setzkopf frisst und somit zu einem Bruch des Federbolzens führen kann. Um den Bruch des Federbolzens zu vermeiden, muss daher der Federbolzen für einen Neuzustand überdimensioniert ausgelegt werden. Alternativ kann die Auflagelasche der Hebelfeder bogenförmig ausgelegt werden. Dies kann jedoch in manchen Zuständen zu einer Kollision mit Kupplungsbauteilen führen, insbesondere mit der Betätigungsfeder.

Hiervon ausgehend liegt der vorliegenden Erfindung die Aufgabe zugrunde, die aus dem Stand der Technik bekannten Nachteile zumindest teilweise zu überwinden. Die erfindungsgemäßen Merkmale ergeben sich aus den unabhängigen Ansprüchen, zu denen vorteilhafte Ausgestaltungen in den abhängigen Ansprüchen aufgezeigt werden. Die Merkmale der Ansprüche können in jeglicher technisch sinnvollen Art und Weise kombiniert werden, wobei hierzu auch die Erläuterungen aus der nachfolgenden Beschreibung sowie Merkmale aus den Figuren hinzugezogen werden können, die ergänzende Ausgestaltungen der Erfindung umfassen.

Die Erfindung betrifft eine Schaftbuchse für einen Federbolzen einer Reibkupplung, welcher zumindest die folgenden Komponenten aufweist:
- ein Kopfende;
- einen am gegenüberliegenden Ende gebildeten Setzabschnitt;
- einen Schaftabschnitt mit einer Schaftachse, mit einer Abschnittshöhe zwischen dem Setzabschnitt und dem Kopfende, mit einem Innendurchmesser und mit einem Außendurchmesser zum Umgeben eines Schafts,
wobei der Setzabschnitt zwei gleichgeformte Vorsprünge aufweist, die sich auf einer kongruenten Linie, bevorzugt diametral zueinander radial, nach außen erstrecken, wobei die Vorsprünge eine axiale Erstreckung aufweisen, die maximal dem Innendurchmesser des Schaftabschnitts entspricht.

Die Schaftbuchse ist ein ringförmiges hohles Element, welches über einen Federbolzen führbar ist beziehungsweise um einen Federbolzen herum anbringbar ist. Besonders bevorzugt ist die Schaftbuchse auf den Federbolzen durch Schieben aufführbar. Ganz besonders bevorzugt ist der Federbolzen in einer Spritzgussform umspritzbar. Die Schaftbuchse weist ein Kopfende auf, welches die eine Begrenzung der Abschnittshöhe des Schaftabschnitts darstellt. Gegenüberliegend weist die Schaftbuchse einen Setzabschnitt auf, der den Schaftabschnitt in dieser Richtung begrenzt. Der Setzabschnitt ist dazu eingerichtet, die Auflagekräfte einer Hebelfeder (unmittelbar) aufzunehmen, sodass diese Hebelkräfte durch den Setzabschnitt der Schaftbuchse geleitet auf den Federbolzen übertragen werden. Somit findet keine Kerbbelastung durch die Hebelfeder auf den Federbolzen statt und der Federbolzen kann für eine deutslich geringere Belastung ohne Kerblastfall dimensioniert werden.

Der Schaftabschnitt weist einen Innendurchmesser auf, mit dem er den Federbolzen umgibt, wobei der Innendurchmesser bevorzugt passgenau für den Federbolzen ausgeführt ist, bevorzugt mit einem Formschluss in Umfangsrichtung um die Schaftachse des Schaftabschnitts, sodass eine relative Verdrehung zwischen der Schaftbuchse und dem Federbolzen unterbunden wird. Der Außendurchmesser des Schaftabschnitts ist derart eingerichtet, dass die Hebelfeder und besonders bevorzugt eine Betätigungsfeder, zum Beispiel eine Tellerfeder einer Reibkupplung, reibend radial und/oder in Umfangsrichtung anliegend an der Schaftbuchse durch den Federbolzen führbar ist. Die Vorsprünge am Setzabschnitt sind gleich geformt, das heißt eine gleichmäßige Auflage der Hebelfeder, bevorzugt in einer Ebene, auf der die Rotationsachse der Reibkupplung senkrecht steht, ist ermöglicht. Die Vorsprünge erstrecken sich dabei bevorzugt diametral zueinander, das heißt, die Schaftachse schneidend, verlaufen die Vorsprünge auf einer kongruenten Linie radial nach außen, sodass sie eine Auflage für eine Hebelfeder bilden. Die axiale Erstreckung der Vorsprünge ist dabei maximal so groß wie der Betrag des Innendurchmessers des Schaftabschnitts. Bevorzugt ist die axiale Erstreckung gerade so gering, dass eine mögliche Kerbwirkung beim gewählten Material keinen Einfluss auf den Federbolzen ergibt. Ganz besonders bevorzugt werden aufgrund der Ausbildung der Vorsprünge auch keine Kerbwirkung auf die Schaftbuchse selbst und auch nicht auf den Federbolzen ausgeübt werden, weil das Ende der Hebelfeder sich über den Vorsprung zum Zentrum der Reibkupplung hin erstreckt und über die Vorsprünge derart abrollt, dass die Endkante der Hebelfeder weder mit den Vorsprüngen noch mit dem Federbolzen in Kontakt kommt. Dass die Vorsprünge einen Bogen ausbilden und dass die Hebelfeder in der maximalen Auslenkung nicht mit dem Setzabschnitt beziehungsweise dem Federbolzen in Kontakt kommen.

Gemäß einer weiteren vorteilhaften Ausführungsform der Schaftbuchse bildet der Setzabschnitt einen sich radial nach außen erstreckenden Umfangsflansch zur axialen Anlage an einem Gegenlager.

Über den sich radial nach außen erstreckenden Umfangsflansch ist es möglich, einen umlaufenden Schutz für den Federbolzen zu bilden, sodass eine eventuelle übermäßige Auslenkung der Hebelfeder nicht zu einer Einkerbung am Federbolzen führen kann. Darüber hinaus kann mittels des Umfangsflanschs die Montage der Schaftbuchse auf dem Federbolzen durch Aufschieben erleichtert werden, indem die Schaftbuchse bis zum Gegenlager auf den Federbolzen aufschiebbar ist und durch den Umfangsflansch aufliegt. Weiterhin ist über den Umfangsflansch eine Stabilisierung der Vorsprünge möglich, welche bevorzugt in beziehungsweise auf dem Umfangsflansch gebildet sind und besonders bevorzugt mit diesem einstückig gebildet sind, sodass die Vorsprünge für den Transport der nicht montierten Schaftbuchse geschützt sind. Auch in einem Einsatz der Schaftbuchse am Federbolzen können die Querkräfte auf die Vorsprünge durch den Umfangsflansch gestützt werden. Es ist aber auch möglich, auf den Umfangsflansch zu verzichten und eine direkte Anlage der Vorsprünge mit dem Federbolzen zu bilden, wobei hier vorteilhafterweise Formelemente am Federbolzen vorgesehen sind, die die Vorsprünge für Querkräfte stützen.

Gemäß einer weiteren vorteilhaften Ausführungsform der Schaftbuchse ist die Schaftbuchse ein Spritzgussteil und bevorzugt der Schaftabschnitt zumindest über einen Teil der Abschnittshöhe mit einem Werkstoff mit geringerem Reibkoeffizienten als der zu umgebende Schaft des Federbolzens ausgebildet.

Spritzgussteile sind besonders kostengünstig für Serien und Großserien fertigbar. Darüber hinaus ist die Form Schaftbuchse in engen Grenzen sehr genau einstellbar, sodass insbesondere Formschlüsse mit einem Federbolzen kostengünstig einstellbar sind. Ganz besonders bevorzugt weist der Schaftabschnitt zumindest über einen Teil der Abschnittshöhe, insbesondere über den Teil, welcher mit der Hebelfeder und/oder einer Betätigungsfeder in Kontakt kommt, ein geringerer Reibkoeffizient, zum Beispiel geringere Rauigkeit und/oder Adhäsion, auf als der zu umgebende Schaft des Federbolzens. Das heißt, dass entweder die Rauigkeit des Schafts des Federbolzens wie fertigungsbedingt belassen werden kann oder der Reibkoeffizient des Teils des Schaftabschnitts der Schaftbuchse gegenüber möglicher anderer metallischer erzielbarer Reibkoeffizienten deutlich geringer ist. Ganz besonders bevorzugt ist dieser Teil der Abschnittshöhe mit einem besonders reibungsarmen Werkstoff gebildet beziehungsweise beschichtet, zum Beispiel mit PEEK [Polyetheretherketon] oder PTFE [Polytetrafluorethylen]. Ganz besonderes bevorzugt ist der Werkstoff mit dem geringeren Reibkoeffizienten eine weitere Buchse, welche über die Schaftbuchse geführt werden kann oder um diese umspritzbar ist.

Gemäß einer weiteren vorteilhaften Ausführungsform der Schaftbuchse entspricht der Außendurchmesser dem Außendurchmesser eines entsprechenden einstückigen Federbolzens ohne Schaftbuchse.

Bei dieser bevorzugten Ausführungsform ist die Schaftbuchse zusammen mit dem Federbolzen mit einem Außendurchmesser ausgestattet, wie ein derzeit bekannter Federbolzen ohne zusätzliche Schaftbuchse ausgebildet ist, um den möglich auftretenden Bolzenbruch infolge der Eingrabung der Hebelfeder im Federbolzen zu unterbinden. Das bedeutet insbesondere für einen Federbolzen aus Stahl und eine Schaftbuchse aus Kunststoff, dass Metall eingespart werden kann und somit der Federbolzen mit Schaftbuchse eine geringere Masse aufweist als ein vorbekannter Federbolzen und somit die rotierende Masse der Reibkupplung reduziert wird. Darüber hinaus werden aufgrund des verringerten Metallaufwands die Materialkosten verringert. In einer solchen Konfiguration bildet die Schaftbuchse bevorzugt allein einen Kerbschutz, wobei die auftretenden Kräfte durch den innenliegenden Federbolzen aufgenommen werden, indem sie durch die Schaftbuchse, welche bei den Krafteinleitungspunkten an dem innenliegenden Federbolzen abgestützt ist, anliegt.

Gemäß einem weiteren Aspekt der Erfindung wird ein Federbolzen für eine Reibkupplung vorgeschlagen, welche zumindest die folgenden Komponenten aufweist:
- ein Befestigungsende, zum Befestigen des Federbolzens;
- einen Setzkopf für die Kraftaufnahme eines Hebelfederelements;
- einen Schaft mit einer Schafthöhe zwischen dem Befestigungsende und dem Setzkopf;
- eine Schaftbuchse, die den Schaft über zumindest einen Teil der Schafthöhe umfänglich umgibt,
wobei die Schaftbuchse mit einem Setzabschnitt kraftübertragende an dem Setzkopf anliegt.

Der hier vorgeschlagene Federbolzen ist dazu eingerichtet, ein Auflager für eine Hebelfeder und insbesondere für eine Betätigungsfeder, zum Beispiel eine Tellerfeder, zu bilden. Hierzu weist der Federbolzen ein Befestigungsende auf, mit dem der Federbolzen, zum Beispiel in einem Kupplungsdeckel, befestigbar ist. Weiterhin weist der Federbolzen gegenüberliegend zum Befestigungsende einen Setzkopf auf, welcher für die Kraftaufnahme des Hebelfederelements eingerichtet ist. Ein solcher Setzkopf ist beispielsweise als sich radial nach außen erstreckender Flansch ausgeführt, sodass ein Hebelfederelement auf dem Setzkopf aufliegen kann. Zwischen dem Befestigungsende und dem Setzkopf erstreckt sich ein Schaft, der zur radialen und/oder umfänglichen Führung des Hebelfederelements und bevorzugt einer Betätigungsfeder eingerichtet ist. Weiterhin ist eine Schaftbuchse vorgesehen, die den Schaft zumindest über einen Teil der Schafthöhe zwischen dem Befestigungsende und dem Setzkopf umgibt, sodass der Federbolzen vor einer direkten Krafteinleitung des Hebelfederelements auf den Schaft und/oder den Setzkopf geschützt ist. Hierbei liegt die Schaftbuchse kraftübertragend an dem Setzkopf an, sodass eine Krafteinleitung eines Hebelfederelements durch den Setzabschnitt auf den Setzkopf möglich ist. Somit wird der Federbolzen vor möglicher Kerbwirkung beziehungsweise vor möglichem Eingraben des Hebelfederelements geschützt. Ganz besonders bevorzugt ist die Schaftbuchse dabei auf den Schaft des Federbolzens aufschiebbar, bis der Setzabschnitt mit dem Setzkopf zum Anliegen kommt. Ganz besonders bevorzugt wird die Schaftbuchse durch Umspritzen in einer Spritzgussform mit dem Federbolzen verbunden. Die Schaftbuchse ist dabei bevorzugt aus einem Material gebildet, welches bei einer Einleitung von Kerbkraft fließend ausweicht und die Kerbung verursachende Krafteinleitung in eine Krafteinleitung auf eine größere Fläche umwandelt. Ganz besonders bevorzugt ist der Setzabschnitt der Schaftbuchse derart eingerichtet, dass das Hebelfederelement nicht mit einer schmalen Endkante mit dem Setzabschnitt und/oder dem Setzkopf zum Anliegen kommt, indem das Hebelfederelement über den Setzabschnitt, zum Beispiel zumindest einen Vorsprung, der Schaftbuchse abrollt.

Gemäß einer weiteren vorteilhaften Ausführungsform des Federbolzens ist die Schaftbuchse gemäß der obigen Beschreibung ausgebildet.

Gemäß einer weiteren vorteilhaften Ausführungsform des Federbolzens ist der Federbolzen aus Metall, bevorzugt durch Fließpressen, gefertigt.

Durch die Ausbildung des Federbolzens aus Metall ist eine besonders geeignete Kraftaufnahme möglich, bei der eine geringe Masse bei hoher Stabilität und Elastizität gebildet ist. Bei einer Fertigung des Federbolzens durch Fließpressen, wird durch den Schmiedeeffekt eine besonders hohe Festigkeit des Federbolzens erreicht, wobei zugleich die Fertigung besonders schnell durchgeführt werden kann. Zudem kann der Federbolzen hier besonders einfach gestaltet werden, insbesondere als vollständig rotationssymmetrisches Bauteil, welches sich für Fließpressen besonders eignet, weil hier die Matrix besonders kostengünstig hergestellt werden kann. Die Schaftbuchse ist hingegen bevorzugt aus einem Kunststoff gebildet, ganz besonders bevorzugt im Bereich der Anlage aus einem reibungsarmen Kunststoff, wie zum Beispiel PEEK oder PTFE.

Gemäß einer weiteren vorteilhaften Ausführungsform des Federbolzens ist das Befestigungsende mit einem Vernietungspartner vernietbar.

Ein solcher Federbolzen ist besonders kostengünstig und einfach in einer Reibkupplung montierbar, indem der Federbolzen mit einem Vernietungspartner formschlüssig und/oder kraftschlüssig zum Beispiel in einem Kupplungsdeckel vernietbar ist. Ganz besonders bevorzugt ist am Befestigungsende ein Formelement vorgesehen, welches ein Verdrehen der Schaftbuchse beziehungsweise des Federbolzens unterbindet. Hierdurch kann darüber hinaus die Montage weniger fehleranfällig ausgeführt sein, indem das Formelement nur eine mögliche Montage des Federbolzens in einer Reibkupplung ermöglicht. Ganz besonders bevorzugt ist eine solche Ausführungsform mit einer Verdrehsicherung der Schaftbuchse gegenüber dem Federbolzen kombiniert.

Gemäß einem weiteren Aspekt der Erfindung wird eine Reibkupplung mit einer Rotationsachse zum lösbaren Verbinden einer Abtriebswelle mit einem Antriebsstrang vorgeschlagen, welche zumindest die folgenden Komponenten aufweist:
- zumindest ein Reibpaket mit zumindest einer Anpressplatte und zumindest einer korrespondierenden Reibscheibe, über die im angepressten Zustand ein Drehmoment übertragbar ist;
- zumindest eine Betätigungsfeder zum Betätigen des zumindest einen Reibpakets;
- ein mitrotierender Kupplungsdeckel, welcher das Reibpaket zumindest teilweise umgibt;
- zumindest ein Federbolzen gemäß der obigen Beschreibung zum Befestigen am Kupplungsdeckel zum Übertragen der Lagerkräfte der Betätigungsfeder in den Kupplungsdeckel;
- zumindest ein Hebelfederelement zum Stützen der Betätigungsfeder auf dem zumindest einen Federbolzen.

Die Reibkupplung ist dazu eingerichtet, ein Drehmoment lösbar von einer Abtriebswelle auf einen Antriebsstrang und umgekehrt zu übertragen. Dies wird in der Regel über das zumindest eine Reibpaket erreicht, welches eine axial verschiebbare, in der Regel mit der Abtriebswelle rotationsfeste, Anpressplatte aufweist, die gegen zumindest eine korrespondierende Reibscheibe pressbar ist. Infolge der Anpresskraft ergibt sich eine Reibkraft über die Reibfläche, die multipliziert mit dem mittleren Radius der Reibfläche ein übertragbares Drehmoment ergibt. Der Federbolzen ist besonders kostengünstig herstellbar und zugleich bruchsicher, wodurch die Lebensdauer verlängerbar beziehungsweise die Ausfallwahrscheinlichkeit verringerbar ist. Zudem wird der Platzbedarf gegenüber vorbekannten Federbolzen nicht vergrößert oder sogar verringert.

Gemäß einem weiteren Aspekt der Erfindung wird auch ein Kraftfahrzeug vorgeschlagen, welches eine Antriebseinheit mit einer Abtriebswelle, einen Antriebsstrang und eine Reibkupplung gemäß der obigen Beschreibung zum lösbaren Verbinden der Abtriebswelle mit dem Antriebsstrang aufweist.

Die meisten Kraftfahrzeuge weisen heutzutage einen Frontantrieb auf und ordnen daher bevorzugt die Antriebseinheit, beispielsweise eine Verbrennungskraftmaschine oder ein Elektromotor, vor der Fahrerkabine und quer zur Hauptfahrrichtung an. Der Bauraum ist gerade bei einer solchen Anordnung besonders gering und es ist daher besonders vorteilhaft, eine Reibkupplung kleiner Baugröße zu verwenden.

Verschärft wird die Bauraumsituation bei Personenkraftwagen der Kleinwagenklasse nach europäischer Klassifizierung. Die verwendeten Aggregate in einem Personenkraftwagen der Kleinwagenklasse sind gegenüber Personenkraftwagen größerer Wagenklassen nicht wesentlich verkleinert. Dennoch ist der zur Verfügung stehende Bauraum bei Kleinwagen wesentlich kleiner. Die oben beschriebene Reibkupplung weist zumindest einen Federbolzen von hoher technischer Zuverlässigkeit auf. Zudem ist eine solche Reibkupplung platzsparend und kostengünstig herstellbar.

Personenkraftwagen werden einer Fahrzeugklasse nach beispielsweise Größe, Preis, Gewicht, Leistung zugeordnet, wobei diese Definition einem steten Wandel nach den Bedürfnissen des Marktes unterliegt. Im US-Markt werden Fahrzeuge der Klasse Kleinwagen und Kleinstwagen nach europäischer Klassifizierung der Klasse der Subcompact Car zugeordnet und im Britischen Markt entsprechen sie der Klasse Supermini beispielsweise der Klasse City Car. Beispiele der Kleinstwagenklasse sind ein Volkswagen Fox oder ein Renault Twingo. Beispiele der Kleinwagenklasse sind ein Alfa Romeo Mito, Volkswagen Polo, Ford Fiesta oder Renault Clio.

Die oben beschriebene Erfindung wird nachfolgend vor dem betreffenden technischen Hintergrund unter Bezugnahme auf die zugehörigen Zeichnungen, die bevorzugte Ausgestaltungen zeigen, detailliert erläutert. Die Erfindung wird durch die rein schematischen Zeichnungen in keiner Weise beschränkt, wobei anzumerken ist, dass die Zeichnungen nicht maßhaltig sind und zur Definition von Größenverhältnissen nicht geeignet sind. Es wird dargestellt in
- Fig. 1:: einen Federbolzen des Stands der Technik mit einer Hebelfeder,
- Fig. 2:: einen Federbolzen des Stands der Technik mit einer Hebelfeder mit Hebelbogen,
- Fig. 3:: einen Federbolzen mit Schaftbuchse,
- Fig. 4:: einen Federbolzen mit Schaftbuchse im Schnitt,
- Fig. 5:: einen Federbolzen mit alternativer Schaftbuchse,
- Fig. 6:: einen Federbolzen mit alternativer Schaftbuchse im Schnitt,
- Fig. 7:: eine Reibkupplung mit Federbolzen; und
- Fig. 8:: ein Kraftfahrzeug mit Reibkupplung.

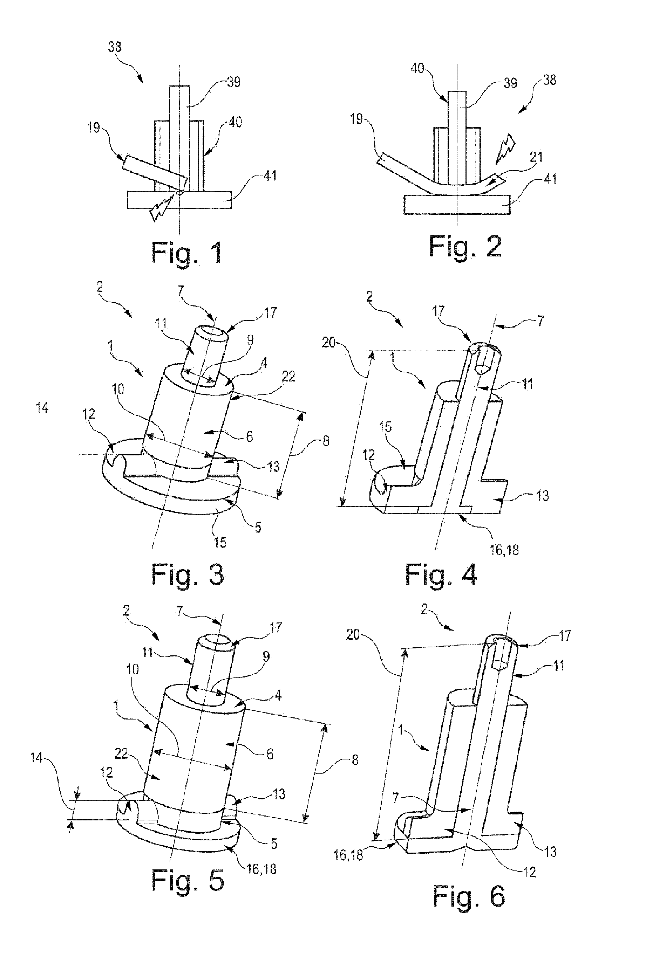

Fig. 1 zeigt einen konventionellen Federbolzen 38, bei dem über den konventionellen Schaft 39 eine konventionelle Schaftbuchse 40 aufgeführt ist, welche allein zum Zentrieren und Führen einer Betätigungsfeder 30 (hier nicht dargestellt) eingerichtet ist. Der konventionelle Federbolzen 38 weist einen konventionellen Setzkopf 41 aus demselben Material wie der konventionelle Schaft 39 auf, in der Regel aus einem Metall. Auf dem konventionellen Setzkopf 41 liegt eine hier rein schematisch dargestellte Hebelfeder 19 auf, die mit ihrer Kante durch den Blitz angedeutet eine Kerbwirkung auf den konventionellen Setzkopf 41 ausübt und somit für ein Brechen des konventionellen Federbolzens 38 sorgen kann.

In Fig. 2 ist hierzu eine alternative Lösung gezeigt, indem die Hebelfeder 19 einen Hebelfederbogen 37 bildet, sodass die Kerbwirkung auf den konventionellen Setzkopf 41 vermieden wird. Hierbei ist jedoch nachteilig, dass bei einer Auslenkung der Hebelfeder 19 eine Kollision mit einer Betätigungsfeder 30 (hier nicht dargestellt) oder einem anderen Bauteil einer Reibkupplung 3 (hier nicht dargestellt) verursachen kann, was hier durch einen Blitz angedeutet ist.

In Fig. 3 ist eine erste Variante eines Federbolzens 2 mit einer Schaftbuchse 1 gezeigt, wobei diese Schaftbuchse 1 entlang der Schaftachse 7 über den Schaft 11 des Federbolzens 2 vom Befestigungsende 17 aus aufführbar ist oder um den Schaft 11 umspritzt ist. Die Schaftbuchse 1 weist einen Setzabschnitt 5 an dem in dieser Darstellung unteren Ende der Schaftbuchse 1 und ein Kopfende 4 am oberen Ende der Schaftbuchse 1 auf. Beim Setzabschnitt 5 sind ein erster Vorsprung 12 und ein zweiter Vorsprung 13 gebildet, die einstückig mit einem Umfangsflansch 15 verbunden sind und eine axiale Erstreckung 14 aufweisen, die geringer ist als der Innendurchmesser 9 der Schaftbuchse 1. Der Außendurchmesser 10 entspricht hierbei einem aus dem Stand der Technik bekannten und eingesetzten Außendurchmesser eines konventionellen Federbolzens, bevorzugt ohne eine konventionelle Schaftbuchse. Die Schaftbuchse 1 weist zudem einen Schaftabschnitt 6 auf, der sich zwischen dem Kopfende 4 und dem Setzabschnitt 5 erstreckt und der zwischen den Vorsprüngen 12 und 13 und dem Kopfabschnitt 4 eine reibungsarme Beschichtung 22 über die Abschnittshöhe 8 der Schaftbuchse 1 aufweist, die bevorzugt aus PEEK gebildet ist.

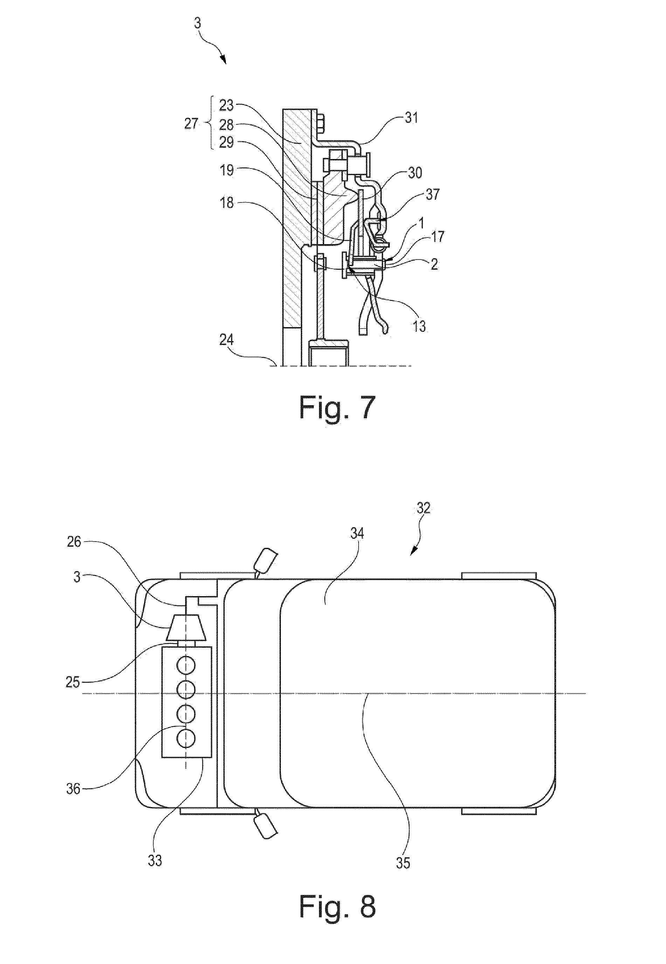

In Fig. 4 ist der Federbolzen 2 wie in Fig. 3 im Schnitt gezeigt, wobei hier das Gegenlager 16, welches von dem Setzkopf 18 des Federbolzens 2 gebildet ist, erkennbar ist, an dem die Schaftbuchse 1 axial gelagert ist. Der Federbolzen 2 weist dabei eine Schafthöhe 20 auf, die sich vom Befestigungsende 17 bis zum Setzkopf 18 erstreckt, wobei das Befestigungsende 17 im Einbau durch zum Beispiel Zug entlang der Schaftachse 7 deformiert wird (vergleiche Fig. 7).

In Fig. 5 ist eine alternative Ausführungsform der Schaftbuchse 1 und des Federbolzens 2 gezeigt, wobei hier der Setzkopf 18 des Federbolzens 2 sich über die gesamte radiale Erstreckung nach außen dehnt und die Vorsprünge 12 und 13 ohne Umfangsflansch 15 (vergleiche Fig. 3) auf dem Setzkopf 18, der das Gegenlager 16 bildet, aufliegt.

In Fig. 6 ist derselbe Federbolzen 2 mit derselben Schaftbuchse 1 wie in Fig. 5 im Schnitt gezeigt, wobei hier das Zusammenspiel zwischen den Vorsprüngen 12 und 13 und dem Gegenlager 16 beziehungsweise dem Setzkopf 18 des Federbolzens 2 gut zu erkennen ist.

In Fig. 7 ist eine Reibkupplung 3 im Schnitt gezeigt, wobei hier teilweise umgeben von einem Kupplungsdeckel 31 ein Reibpaket 27 bestehend aus einer Gegenplatte 23, einer Anpressplatte 28 und einer dazwischen verpressbaren Reibscheibe 29 angeordnet ist. Die Elemente der Reibkupplung 3 sind um eine Rotationsachse 24 rotierbar. Das Reibpaket 27 ist über eine Betätigungsfeder 30 betätigbar, welche mit Hilfe einer Nachstelleinrichtung 37 bei einem Verschleiß der Reibbeläge des Reibpakets 27 verlagerbar ist. Eine Notwendigkeit der Verlagerung wird zum Beispiel über die Hebelfeder 19 sensiert, welche zudem die Betätigungsfeder 30 lagert. Die Hebelfeder 19 liegt auf dem Setzkopf 18 beziehungsweise einem Vorsprung 13 auf dem Federbolzen 2 auf, welcher eine Schaftbuchse 1 aufweist. Der Federbolzen 2 ist hier mit einer gebrochenen Ansicht der Schaftbuchse 1 dargestellt und entspricht im Wesentlichen der Konfiguration in den Figuren 5 und 6. Hierbei ist zu erkennen, dass das Befestigungsende 17 zur Befestigung des Federbolzens 2 deformiert ist, also der Federbolzen 2 als Deckelniet ausgebildet ist.

In Fig. 8 ist ein Kraftfahrzeug 32 mit einer Antriebseinheit 33 gezeigt, welche mit ihrer Motorachse 26 quer zur Längsachse 35 vor der Fahrerkabine 34 angeordnet ist. Die Antriebseinheit 33 ist hier als Verbrennungskraftmaschine dargestellt, welche über eine Abtriebswelle 25 mittels einer Reibkupplung 3 mit einem hier rein schematisch dargestellten Antriebsstrang 26 verbunden ist.

Mit dem hier vorgeschlagenen Federbolzen beziehungsweise der vorgeschlagenen Schaftbuchse ist es möglich, mit einfachen Fertigungsmitteln eine verbesserte Festigkeit des Federbolzens bei geringerem Materialeinsatz zu erreichen.

### Bezugszeichenliste

- 1: Schaftbuchse
- 2: Federbolzen
- 3: Reibkupplung
- 4: Kopfende
- 5: Setzabschnitt
- 6: Schaftabschnitt
- 7: Schaftachse
- 8: Abschnittshöhe
- 9: Innendurchmesser
- 10: Außendurchmesser
- 11: Schaft
- 12: erster Vorsprung
- 13: zweiter Vorsprung
- 14: axiale Erstreckung
- 15: Umfangsflansch
- 16: Gegenlager
- 17: Befestigungsende
- 18: Setzkopf
- 19: Hebelfederelement
- 20: Schafthöhe
- 21: Hebelfederbogen
- 22: Reibungsarme Beschichtung
- 23: Gegenplatte
- 24: Rotationsachse
- 25: Abtriebswelle
- 26: Antriebsstrang
- 27: Reibpaket
- 28: Anpressplatte
- 29: Reibscheibe
- 30: Betätigungsfeder
- 31: Kupplungsdeckel
- 32: Kraftfahrzeug
- 33: Antriebseinheit
- 34: Fahrerkabine
- 35: Längsachse
- 36: Motorachse
- 37: Nachstelleinrichtung
- 38: konventioneller Federbolzen
- 39: konventioneller Schaft
- 40: konventionelle Schaftbuchse
- 41: konventioneller Setzkopf

## Patentansprüche

1. Schaftbuchse (1) für einen Federbolzen (2) einer Reibkupplung (3), aufweisend zumindest die folgenden Komponenten:
- ein Kopfende (4);
- einen am gegenüberliegenden Ende gebildeten Setzabschnitt (5);
- einen Schaftabschnitt (6) mit einer Schaftachse (7), mit einer Abschnittshöhe (8) zwischen dem Setzabschnitt (5) und dem Kopfende (4), mit einem Innendurchmesser (9) und mit einem Außendurchmesser (10) zum Umgeben eines Schafts (11),
wobei der Setzabschnitt (5) zwei gleichgeformte Vorsprünge (12,13) aufweist, die sich auf einer kongruenten Linie, bevorzugt diametral zueinander radial, nach außen erstrecken, wobei die Vorsprünge (12,13) eine axiale Erstreckung (14) aufweisen, die maximal dem Innendurchmesser (9) des Schaftabschnitts (6) entspricht.

2. Schaftbuchse (1) nach Anspruch 1, wobei der Setzabschnitt (5) einen sich radial nach außen erstreckenden Umfangsflansch (15) zur axialen Anlage an einem Gegenlager (16) bildet.

3. Schaftbuchse (1) nach Anspruch 1 oder 2, wobei die Schaftbuchse (1) ein Spritzgussteil ist, und bevorzugt der Schaftabschnitt (6) zumindest über einen Teil der Abschnittshöhe (8) mit geringerem Reibkoeffizienten als der zu umgebende Schaft (11) des Federbolzens (2) gebildet ist.

4. Schaftbuchse (1) nach einem der vorhergehenden Ansprüche, wobei der Außendurchmesser (10) dem Außendurchmesser (10) eines entsprechenden einstückigen Federbolzens (2) ohne Schaftbuchse (1) entspricht.

5. Federbolzen (2) für eine Reibkupplung (3), aufweisend zumindest die folgenden Komponenten:
- ein Befestigungsende (17), zum Befestigen des Federbolzens (2);
- einen Setzkopf (18) für die Kraftaufnahme eines Hebelfederelements (19);
- einen Schaft (11) mit einer Schafthöhe (20) zwischen dem Befestigungsende (17) und dem Setzkopf (18);
- eine Schaftbuchse (1), die den Schaft (11) über zumindest einen Teil der Schafthöhe (20) umfänglich umgibt,
wobei die Schaftbuchse (1) mit einem Setzabschnitt (5) kraftübertragende an dem Setzkopf (18) anliegt.

6. Federbolzen (2) nach Anspruch 5, wobei die Schaftbuchse (1) nach einem der Ansprüche 1 bis 4 ausgebildet ist.

7. Federbolzen (2) nach Anspruch 5 oder 6, wobei der Federbolzen (2) aus Metall, bevorzugt durch Fließpressen, gefertigt ist.

8. Federbolzen (2) nach einem der Ansprüche 5 bis 7, wobei das Befestigungsende (17) mit einem Vernietungspartner (21) vernietbar ist, wobei bevorzugt ein Formelement (22) am Federbolzen (2) ein Verdrehen der Schaftbuchse (1) nach einem Vernieten mithilfe eines Gegenelements (23) am Vernietungspartner (21) unterbindet.

9. Reibkupplung (3) mit einer Rotationsachse (24) zum lösbaren Verbinden einer Abtriebswelle (25) mit einem Antriebsstrang (26), aufweisend zumindest die folgenden Komponenten:
- zumindest ein Reibpaket (27) mit zumindest einer Anpressplatte (28) und zumindest einer korrespondierenden Reibscheibe (29), über die im angepressten Zustand ein Drehmoment übertragbar ist;
- zumindest eine Betätigungsfeder (30) zum Betätigen des zumindest einen Reibpakets (27);
- ein mitrotierender Kupplungsdeckel (31), welcher das Reibpaket (27) zumindest teilweise umgibt;
- zumindest ein Federbolzen (2) nach einem der Ansprüche 5 bis 8 zum Befestigen am Kupplungsdeckel (31) zum Einleiten der Lagerkräfte der Betätigungsfeder (30) in den Kupplungsdeckel (31);
- zumindest ein Hebelfederelement (19) zum Stützen der Betätigungsfeder (30) auf dem zumindest einen Federbolzen (2).

10. Kraftfahrzeug (32) aufweisend eine Antriebseinheit (33) mit einer Abtriebswelle (25), einen Antriebsstrang (26) und eine Reibkupplung (3) nach Anspruch 9.
